# EUROPÄISCHE PATENTANMELDUNG

(11) **EP 4 755 616 A1**
(43) Veröffentlichungstag der Anmeldung: **10.06.2026**
(21) Anmeldenummer: 25220461.5
(22) Anmeldetag: 03.12.2025
(51) Int. Cl.: B29C 70/44, B29C 70/48, B29C 70/54, F04B 43/00, F04B 43/12, F16L 53/38, G01L 9/00

(54) **VORRICHTUNG UND VERFAHREN ZUR HERSTELLUNG EINES FASERVERBUNDBAUTEILS**

(30) Priorität: 03.12.2024 DE 102024135908
(71) Anmelder: Deutsches Zentrum für Luft- und Raumfahrt e.V., 53227 Bonn-Oberkassel (DE)
(72) Erfinder: Grohmann, Yannis, 20249 Hamburg (DE); Behrens, Florian, 21698 Harsefeld (DE)
(74) Vertreter: Gramm, Lins & Partner Patent- und Rechtsanwälte PartGmbB

(57) **Zusammenfassung**

Die Erfindung betrifft eine Vorrichtung zur Herstellung eines Faserverbundbauteils aus einem Faserverbundwerkstoff aufweisend ein Fasermaterial und ein das Fasermaterial einbettendes Matrixmaterial eingerichtet zur Durchführung eines Injektionsverfahrens, bei dem das in ein Formwerkzeug eingebrachte, trockene Fasermaterial mit dem Matrixmaterial injiziert wird, umfassend:
- ein Matrixreservoir, in dem das zu injizierende Matrixmaterial bevorratet ist,
und
- ein Leitungssystem, das zumindest eine Zuleitung von dem Matrixreservoir zu einem Einlass an dem Formwerkzeug hat, um das Matrixmaterial von dem Matrixreservoir in das in das Formwerkzeug eingebrachte Fasermaterial zu injizieren,
**dadurch gekennzeichnet, dass**
- die mindestens eine Zuleitung zumindest abschnittsweise eine durchgehende flexible Schlauchleitung hat,
- wobei zwischen Matrixreservoir und Einlass in der flexiblen Schlauchleitung mindestens eine Peristaltikpumpe vorgesehen ist,
- wobei die mindestens eine Peristaltikpumpe eingerichtet ist, durch eine äußere mechanisch-elastische Verformung der flexiblen Schlauchleitung das Matrixmaterial von dem Matrixreservoir in das Fasermaterial zu injizieren.

## Beschreibung

Die Erfindung betrifft eine Vorrichtung zur Herstellung eines Faserverbundbauteils aus einem Faserverbundwerkstoff aufweisend ein Fasermaterial und ein das Fasermaterial einbettendes Matrixmaterial eingerichtet zur Durchführung eines Injektionsverfahrens, bei dem das in ein Formwerkzeug eingebrachte, trockene Fasermaterial mit dem Matrixmaterial injiziert wird.

Die Erfindung betrifft ebenso ein Herstellungsverfahren hierzu.

Aufgrund der gewichtsspezifischen Festigkeit und Steifigkeit von Faserverbundbauteilen, die aus Faserverbundwerkstoffen hergestellt werden, sind derartige Bauteile aus der Luft- und Raumfahrt sowie aus der Automobilebereich heutzutage kaum mehr wegzudenken. Bei der Herstellung eines Faserverbundbauteils wird dabei ein in ein Fasermaterial injiziertes Matrixmaterial meist unter Temperatur- und Druckbeaufschlagung ausgehärtet bzw. konsolidiert und bildet so nach dem Aushärten eine integrale Einheit mit dem Fasermaterial. Die Verstärkungsfasern des Fasermaterials werden hierdurch in die vorgegebene Richtung gezwungen und können die auftretenden Lasten in die vorgegebene Richtung abtragen.

Faserverbundwerkstoffe, aus denen derartige Faserverbundbauteile hergestellt werden, weisen in der Regel zwei Hauptbestandteile auf, nämlich zum einen ein Fasermaterial und zum anderen ein Matrixmaterial. Hierneben können noch weitere sekundäre Bestandteile verwendet werden, wie beispielsweise Bindermaterialien oder zusätzliche Funktionselemente, die in das Bauteil integriert werden sollen.

Neben trockenen Fasermaterialien, die in einem anschließenden Injektionsprozess mit dem Matrixmaterial injiziert werden müssen, werden auch bereits vorimprägnierte Fasermaterialien (sogenannte Prepregs) verwendet, bei denen das Fasermaterial mit dem Matrixmaterial bereits vorimprägniert ist. Ein anschließender Injektionsprozess ist dann in der Regel nicht mehr notwendig. Vor dem Aushärten des Matrixmaterials wird in der Regel das Fasermaterial in ein Formwerkzeug eingebracht, dass mit seiner formgebenden Werkzeugoberfläche die spätere Bauteileilform nachbildet.

Bei der Verwendung von trockenem Fasermaterial wird zur Injektion des Matrixmaterials in das Fasermaterial oftmals ein Vakuuminjektionsverfahren genutzt, bei dem das Fasermaterial meist auf einem Formwerkzeug abgelegt und mittels eines Vakuumaufbaus vakuumdicht verschlossen wird. Anschließend wird das vakuumdicht abgeschlossene Fasermaterial evakuiert, so dass aufgrund des Druckgradienten zwischen Fasermaterial und äußerer Umgebung das Matrixmaterial in das Fasermaterial injiziert. Anschließend kann das Matrixmaterial beispielsweise in einem Autoklaven ausgehärtet und so das Bauteil hergestellt werden.

Hierneben ist es aber auch bekannt, geschlossene Formwerkzeuge zu verwenden, die aus zwei oder mehr Werkzeughälften bestehen und im geschlossenen Zustand eine Bauteilkavität bilden, in die das Fasermaterial eingebracht wird. Nach dem Schließen des Formwerkzeuges kann dann ebenfalls die gebildete Bauteilkavität evakuiert werden, um ein Injizieren des Matrixmaterials zu erreichen. Durch das feste Verschließen des Werkzeugs kann ein hoher Druck aufgebracht werden, der sowohl für die Injektion als auch für die Aushärtung des Matrixmaterials entscheidend ist. Diese Eigenschaft ermöglicht eine schnelle Produktion und die Einhaltung hoher Qualitätsstandards.

Das RTM-Verfahren (Vakuuminjektionsverfahren) hat sich als eine bedeutende Methode zur Herstellung hochwertiger FVK-Komponenten etabliert, insbesondere im Bereich der CFK-Anwendungen im Flugzeugbau. Durch dieses Verfahren können komplexe Strukturen mit integrierten Elementen wie Stringern, Flanschen und Spanten in integraler Bauweise hergestellt werden. Diese Methode eignet sich daher die Serienproduktion von Bauteilen, was sie besonders attraktiv macht.

Der Prozess des RTM-Verfahrens umfasst dabei das Injizieren bzw. Injizieren von flüssigem Matrixmaterial, welches in der Regel auf eine erforderliche Injektionstemperatur erwärmt wurde. In der Praxis stehen hierfür im Wesentlichen zwei Methoden zur Verfügung. Die erste Methode beinhaltet das Einbringen des Matrixmaterials in einen Drucktopf, von dem aus es mit Hilfe von Druckluft über Leitungen in das Werkzeug gespritzt wird. Diese Methode zeichnet sich durch ihre Robustheit aus und erfordert nur wenige Komponenten, was den Reinigungsaufwand minimiert. Bei der zweiten Methode kommt eine Fluidpumpe zum Einsatz, um präzisere Druckregelung und einen hohen Druck zu ermöglichen. Allerdings erfordert diese Methode eine aufwendigere Reinigung, insbesondere bei Verwendung von 1-Komponenten-Matrixsystemen.

Die präzise Regelung des Injektionsvorgangs ist entscheidend, um die Fasern gleichmäßig mit dem Matrixmaterial zu injizieren und das Entstehen trockener Stellen zu vermeiden. Ein hoher Druck ist anschließend wichtig, um die Bildung von Poren im Bauteil zu verhindern. Die Kontrolle des Injektionsvorgangs ermöglicht auch die genaue Dosierung des Harzes und die Überwachung des Fortschritts während des Prozesses.

Die Verwendung eines Drucktopfes zur Injektion des Matrixmaterials im RTM-Verfahren weist jedoch in der Praxis einige Nachteile auf. Die Kontrolle und Einstellung des Materialflusses gestalten sich aufgrund des kompressiblen Luftdruckes als träge und schwierig, was wiederum die Bewertung des Fortschritts während des Prozesses erschwert. Außerdem entsteht insbesondere bei dem Drucktop, den Steigleitungen und den Fittingen ein nicht unerheblicher Reinigungsaufwand, insbesondere bei niedrigen Stückzahlen, wie sie bspw. bei Forschungs- und Entwicklungsprojekten häufig vorkommen, unverhältnismäßig hoch ist.

Die Alternative, die Verwendung einer Fluidpumpe, hat ebenfalls ihre Herausforderungen. Hier lassen sich zwar Prozessparameter besser und genauer einstellen, jedoch müssen die Leitungen und die Pumpe selbst durch eine aufwendige chemische Reinigung gereinigt werden. Die Reinigung gestaltet sich schwierig, da die zu reinigenden Bereiche oft schwer zugänglich sind. Hierbei werden große Mengen an Reinigungsmittel wie Laugen oder Lösungsmittel benötigt, die über längere Zeit durch die Leitungen gespült werden müssen. Besonders bei der Verwendung von 1-Komponenten-Matrixsystemen können trotzdem Bereiche entstehen, in denen Materialreste verbleiben und nachfolgende Bauteile verunreinigen. Im schlimmsten Fall können diese Materialreste sogar die Pumpe beschädigen.

Diese Nachteile des aktuellen Standes der Technik verdeutlichen die Herausforderungen und Einschränkungen bei der Matrixinjektion im RTM-Verfahren. Die Reinigungsprozesse sind zeitaufwendig und komplex, was zu zusätzlichem Arbeitsaufwand und potenziellen Risiken für die Bauteilqualität führen kann.

Es ist daher Aufgabe der vorliegenden Erfindung eine verbesserte Vorrichtung für ein RTM-Verfahren anzugeben sowie ein verbessertes Verfahren hierzu, um den Reinigungsaufwand zu vereinfachen.

Die Aufgabe wird mit der Injektionsvorrichtung gemäß Anspruch 1 erfindungsgemäß gelöst. Vorteilhafte Ausgestaltungen der Erfindung finden sich dann in den entsprechenden Unteransprüchen.

Gemäß Anspruch 1 wird eine Vorrichtung zur Herstellung eines Faserverbundbauteils aus einem Faserverbundwerkstoff aufweisend ein Fasermaterial und ein das Fasermaterial einbettendes Matrixmaterial eingerichtet zur Durchführung eines Injektionsverfahrens vorgeschlagen, bei dem das in ein Formwerkzeug eingebrachte, trockene Fasermaterial mit dem Matrixmaterial injiziert wird. Die gattungsgemäße Injektionsvorrichtung umfassend dabei insbesondere ein Matrixreservoir, in dem das zu injizierende Matrixmaterial bevorratet ist, und ein Leitungssystem, das zumindest eine Zuleitung von dem Matrixreservoir zu einem Einlass an dem Formwerkzeug hat, um das Matrixmaterial von dem Matrixreservoir in das in das Formwerkzeug eingebrachte Fasermaterial zu injizieren.

Erfindungsgemäß ist nun vorgesehen, dass die mindestens eine Zuleitung zumindest abschnittsweise eine durchgehende flexible Schlauchleitung hat, wobei zwischen Matrixreservoir und Einlass in der flexiblen Schlauchleitung mindestens eine Peristaltikpumpe vorgesehen ist, und wobei die mindestens eine Peristaltikpumpe eingerichtet ist, durch eine äußere mechanisch-elastische Verformung der flexiblen Schlauchleitung das Matrixmaterial von dem Matrixreservoir in das Fasermaterial zu injizieren.

Es wird demnach vorgeschlagen, von einem Auslass des insbesondere drucklosen Matrixreservoirs bis zum Einlass an dem Formwerkzeug eine Zuleitung vorgesehen ist, die mindestens abschnittsweise eine durchgehende flexible Schlauchleitung ist, die mit einer Peristaltikpumpe so in Wirkverbindung steht, dass diese durch eine äußere mechanische Verformung der flexiblen Schlauchleitung das Matrixmaterial von dem drucklosen Matrixreservoir in den Einlass und somit in das Formwerkzeug bzw. den Vakuumaufbau fördert und so das Fasermaterial mit dem Matrixmaterial injiziert.

Dabei ist es besonders vorteilhaft, wenn die gesamte Zuleitung von dem Auslass des Matrixreservoirs bis zum Einlass an dem Formwerkzeug eine flexible Schlauchleitung ist, die insbesondere im Bereich der Peristaltikpumpe durchgehend ist. Eine größtmögliche Vereinfachung der Handhabung entsteht dann, wenn die flexible Schlauchleitung von dem Auslass des Matrixreservoirs bis zum Einlass an dem Formwerkzeug durchgehend als flexible Schlauchleitung ausgebildet ist. Hierbei ist besonders vorteilhaft, dass keine Verbindungsstücke oder Fittinge notwendig sind, die hinterher entweder aufwendig gereinigt oder mit entsorgt werden müssen, was die Kosten der Einzelfertigung erhöht. Es ist aber auch denkbar, dass von dem Auslass des Matrixreservoirs bis zum Einlass an dem Formwerkzeug eine flexible Schlauchleitung vorgesehen ist, die ein oder mehrere Verbindungsstücke aufweist, um insbesondere bei großen Bauteilen die Handhabung bei der Installation zu vereinfachen. Die Verbindungsstücke sollten dann zur Einmalanwendung vorgesehen sein und werden am Ende des Prozesses entsorgt.

Hierdurch wird es möglich, nach dem Injizieren des Matrixmaterials die gesamte flexible Schlauchleitung zu entsorgen und für einen nächsten Produktionszyklus einfach eine neue flexible Schlauchleitung einzusetzen, ohne dass zusätzliche, zu reinigende Verbindungselemente notwendig sind und ohne das entsprechende Reinigungsmaßnahmen die Wiederverwendung des Formwerkzeuges unterbrechen.

Es ist somit vom Erfindungsgedanken umfasst, dass die gesamte Zuleitung von dem Matrixreservoir zu dem Einlass an dem Formwerkzeug nach der Herstellung des Bauteils entsorgt wird und durch eine neue Zuleitung ersetzt wird, ohne dass eine Reinigungsaufwand entsteht. Wenn hier eine durchgehende flexible Schlauchleitung verwendet wird, bedarf es keiner zusätzlichen Verbindungselemente, um die Zuleitung aus mehreren Elementen zusammenzusetzen. Bestmöglich ist jedoch, dass die gesamte Zuleitung entsorgt wird, um den Reinigungsaufwand hierbei zu minimieren, was insbesondere bei der Verwendung eines drucklosen Matrixreservoir von besonderer Bedeutung ist.

Die Zuleitung weist demnach erfindungsgemäß zumindest einen Abschnitt auf, der aus einer flexiblen Schlauchleitung gebildet ist, wobei dieser Abschnitt mit der flexiblen Schlauchleitung mit der Peristaltikpumpe in Wirkverbindung steht. Die davon verschiedenen Abschnitte, die nicht mit der Peristaltikpumpe in Wirkverbindung stehen, können aus einem biegefesten Schlauchleitung gebildet sein. Am Übergang zwischen der biegefesten Schlauchleitung und der flexiblen Schlauchleitung mit der Peristaltikpumpe können entsprechende Verbindungsstücke vorgesehen sein, die vorzugsweise am Ende des Prozesses entsorgt werden.

Bei dem Matrixharz handelt es sich vorzugsweise um ein duroplastisches Kunststoffmaterial oder um ein thermoplastisches Kunststoffmaterial.

Des Weiteren kann durch die Verwendung einer Peristaltikpumpe die Fördergeschwindigkeit und/oder der Förderdruck durch eine entsprechende Steuerung sehr feingliedrigen eingestellt werden, umso ein bestmögliches Ergebnis der Infiltration zu erzielen. Hierdurch kann die Entstehung von trockenen Stellen innerhalb des Fasermaterials, die durch eine nicht ausreichende Injektion des Matrixmaterials entstehen, reduziert oder gänzlich vermieden werden.

Mit der vorliegenden Erfindung können somit zwei wesentliche Vorteile erzielt werden, nämlich eine Reduzierung des Reinigungsaufwand nach Injektion einerseits in Verbindung mit einer Fluidpumpe zur gezielten Steuerung der Injektion andererseits.

Dabei ist es besonders vorteilhaft, wenn die gesamte Zuleitung vom Matrixreservoir bis zum Einlass an dem Formwerkzeug und insbesondere auch innerhalb der Fluidpumpe mittels einer Temperiereinrichtung temperiert wird, sodass das Matrixmaterial auch bei Verwendung einer Fluidpumpe eine innerhalb von Toleranzen konstante Temperatur hat, wodurch hinsichtlich der Viskosität des Matrixmaterials eine sehr hohe Prozessgenauigkeit und Prozesssicherheit gewonnen werden kann. Es kann somit die Viskosität des Matrixmaterials sehr genau reguliert und eingestellt werden, um eine gleichbleibende Fließeigenschaft sicherzustellen. Dies gewährleistet, dass das Matrixmaterial stets die optimale Verarbeitungstemperatur besitzt.

In einer einfachen Ausführungsform setzt sich die Peristaltikpumpe zusammen aus einem Gehäuse, einem angetriebenen Planetenrad mit Rollen und einem Stator als Gegenhalter. Zwischen den Rollen des Planetenrades und dem Stator wird der flexible Abschnitt der Schlauchleitung geführt. Wird das Planetenrad gedreht, so wird die flexible Schlauchleitung durch die Rollen an dem Planetenrad zusammengedrückt, wobei diese Abklemmstelle dann durch die Drehung entlang des Schlauches bewegt wird und dadurch das Matrixharz in dem Schlauch vorantreibt.

Die Steuerung der Matrixmaterialmenge erfolgt über die Drehzahl des Planetenrades und/oder die Steuerung des Förderdrucks erfolgt über die am Stator und den Rollen in Wirkverbindung stehende Schlauchlänge, wodurch eine präzise Dosierung ermöglicht wird. Darüber hinaus kann der Injektionsdruck durch das Anlegen eines Drehmoments an das Rad gesteuert werden.

Nach Abschluss des Injektionsprozesses kann die Schlauchleitung einfach entfernt werden, wodurch keine weiteren Komponenten außer dem Matrixreservoir und ggf. dem Einlass des Werkzeugs mit dem flüssigen Matrixmaterial in Kontakt kommen. Die Reinigung gestaltet sich vergleichsweise einfach, da der Schlauch gleichmäßig ist und keine schwer zugänglichen Bereiche aufweist, wie sie bei herkömmlichen Pumpen vorkommen. Der Schlauch kann entweder ohne Einsatz von Reinigungsmitteln entsorgt oder in einem chemischen oder mechanischen Reinigungsverfahren gereinigt werden. Diese Lösung bietet somit eine effiziente und saubere Alternative zur herkömmlichen Pumpentechnologie, die die Herausforderungen des RTM-Prozesses erfolgreich bewältigt.

Die durchgehende flexible Schlauchleitung kann einer sehr einfachen Ausführungsform in das Matrixreservoir eingesetzt und mit dem Einlass/Anschluss an dem Formwerkzeug verbunden werden. Dabei kann vorgesehen sein, dass der Einlass so ausgebildet ist, dass die durchgehende flexible Schlauchleitung bis in die Bauteilkavität innerhalb des Formwerkzeuges geführt werden kann, umso das Matrixmaterial ohne weitere zwischengeschaltete Komponenten des Formwerkzeuges direkt in das Fasermaterial injizieren zu können. Hierdurch wird noch einmal der Reinigungsprozess vereinfacht.

Gemäß einer Ausführungsform ist vorgesehen, dass das Matrixreservoir drucklos ist. Bei der Verwendung einer Peristaltikpumpe ist dabei ein sogenannter Drucktopf nicht notwendig, was den Anlagenaufwand verringert und die Installation und Reinigung vereinfacht.

Gemäß einer Ausführungsform ist vorgesehen, dass am Einlass eine erste flexible Schlauchleitung vorgesehen ist und dass das Leitungssystem ferner mindestens eine an einem Auslass an dem Formwerkzeug angeordnete zweite flexible Schlauchleitung aufweist, wobei in der zweiten flexiblen Schlauchleitung ebenfalls mindestens eine Peristaltikpumpe vorgesehen ist.

Bei dieser Ausführungsform wird eine zweite Peristaltikpumpe in der zweiten flexiblen Schlauchleitung verwendet, die an einem Ausgang des Formwerkzeuges technisch wirksam eingreift. Hierdurch kann das Fließen des Matrixmaterials durch das Fasermaterial in dem Formwerkzeug unterstützt werden, um so das Injektionsergebnis zu verbessern. Der Spülvorgang nach dem Füllen der Bauteilkavität wird dadurch erleichtert, wodurch Fehlstellen weiter minimiert werden können.

Des Weiteren ist es denkbar, dass durch eine Rückwärtslaufen der zweiten Peristaltikpumpe am Ende des Spülvorgangs ein Druck von zwei Seiten auf die Bauteilkavität aufgebracht werden kann, um so den Innendruck im Werkzeug gleichmäßiger in den Fasern zu verteilen.

Die erste Peristaltikpumpe, die in der Zuleitung zum Formwerkzeug vorgesehen ist, ist dabei mit einer Steuereinheit verbunden, die eingerichtet ist, die erste Peristaltikpumpe entsprechend anzusteuern. Ein entsprechendes computerimplementierte Steuerverfahren steuert die erste Peristaltikpumpe so, dass das Matrixmaterial in das Fasermaterial in dem Formwerkzeug injiziert wird. Dabei kann auch die zweite Peristaltikpumpe mit der Steuereinheit verbunden sein, um während des Injizierens synchron mit der ersten Peristaltikpumpe zu laufen und am Ende des Spülvorgangs dann beispielsweise gegenläufig arbeitet, um wie oben beschrieben den Innendruck im Werkzeug zu erhöhen und dadurch eine bessere Verteilung des Matrixmaterials zu erreichen.

Gemäß einer Ausführungsform ist vorgesehen, dass die zweite flexible Schlauchleitung in die erste flexible Schlauchleitung und/oder in das Matrixreservoir mündet.

Hierdurch wird eine Art Spülkreislauf geschaffen, bei dem das Matrixmaterial in einem Kreislauf fließt. Hierzu kann die zweite flexible Schlauchleitung mit einem T-Stück in die erste flexible Schlauchleitung eingebunden sein oder die zweite flexible Schlauchleitung mündet direkt in das Matrixreservoir. Bei dieser Variante kann auf eine sogenannte Harzfalle verzichtet werden.

Dies hat den Vorteil, dass insbesondere bei großen, voluminösen Bauteilen der Verbrauch an Matrixmaterial reduziert werden kann, während gleichzeitig die Bauteilqualität durch einen kontinuierlichen Spülvorgang verbessert wird.

Die nachfolgenden Ausführungen bezüglich einer vorteilhaften Peristaltikpumpe können sich dabei auf sämtliche Pumpen innerhalb des Aufbaus beziehen.

Gemäß einer Ausführungsform ist vorgesehen, dass die mindestens eine Peristaltikpumpe einen Rotor mit mehreren Förderelementen und einen Stator hat, auf dem die flexible Schlauchleitung abgestützt ist, während durch Drehung des Rotors die Förderelemente zur Förderung des Matrixmaterials die mindestens eine flexible Schlauchleitung gegen den Stator abklemmen und so mechanisch-elastisch verformen.

Dabei kann vorgesehen sein, dass der Rotor mit den Förderelementen so ausgebildet ist, dass die Förderelemente mehr als eine flexible Schlauchleitung gegen den Stator abklemmen und so mechanisch verformen. Bei dieser Ausführungsform wird durch eine einzige Peristaltikpumpe mit einem Rotor und mehreren, an dem Rotor angeordneten Förderelementen eine Förderung des Matrixmaterials in mehr als einer einzigen flexiblen Schlauchleitung erreicht. Hierzu werden in die Mehrfach-Peristaltikpumpe mehrere flexible Schlauchleitungen eingelegt, die dann mit den Förderelementen gemeinsamen Wirkverbindung stehen.

Durch die Förderelemente und die Drehung des Rotors wird die flexible Schlauchleitung in radialer Richtung gequetscht, wobei diese Abklemmstelle durch die Drehung des Rotors am Stator entlang bewegt wird. Hierdurch wird das Matrixmaterial in der flexiblen Schlauchleitung vor der Abklemmstelle geschoben, während hinter der Abklemmstelle ein Unterdruck entsteht, das Matrixmaterial aus dem Matrixreservoir zieht bzw. ansaugt.

Gemäß einer Ausführungsform ist vorgesehen, dass eine Heizvorrichtung vorgesehen ist, die zum Temperieren zumindest eines Teils der Peristaltikpumpe eingerichtet ist.

Dadurch wird erreicht, dass auch während des Förderns des Matrixmaterials innerhalb der Peristaltikpumpe das Matrixmaterial weiterhin auf der gewünschten Prozesstemperatur verbleibt, umso die gewünschte Viskosität auch innerhalb der Peristaltikpumpe zu gewährleisten.

Die Heizvorrichtung kann dabei eingerichtet sein, bestimmte Komponenten der Peristaltikpumpe zu temperieren, bspw. den Stator, den Rotor und/oder die Förderelemente. Dadurch kann auf eine Heizvorrichtung in der flexiblen Schlauchleitung in diesem Bereich verzichtet werden, was wegen der mechanischen Verformung der Schlauchleitung vorteilhaft ist.

Es ist außerdem denkbar, dass die Heizvorrichtung zum Einblasen von Heißluft in das Innere des Pumpengehäuses der Peristaltikpumpe ausgebildet ist, sodass beim Durchlaufen des Matrixmaterials durch das Pumpengehäuse dieses weiterhin auf Prozesstemperatur verbleibt.

Es ist allerdings auch denkbar, dass die Heizvorrichtung eine insbesondere durchgehende Schlauchheizung umfasst, die zum Beheizen der Schlauchleitung, zumindest abschnittsweise auch in dem Pumpengehäuse, eingerichtet ist. Dabei ist denkbar, dass die gesamte Schlauchleitung vom Matrixreservoir bis zum Einlass mittels einer Schlauchheizung temperierbar ist, indem bspw. die Schlauchleitung mit einer Schlauchheizung ummantelt ist.

Gemäß einer Ausführungsform ist vorgesehen, dass die Förderelemente an einer Förderkette angeordnet sind, die einen mit dem Stator korrespondierenden Geradenabschnitt hat und die mit dem Rotor zum drehbaren Antreiben in Wirkverbindung steht.

Bei dieser Ausführung der Peristaltikpumpe werden die Förderelemente, bspw. Rollen, an einer Kette oder einem Riemen geführt, bspw. horizontal. Hierdurch kann die Weglänge der Wechselwirkung zwischen Stator und Förderelement vergrößert oder auch variabel gehalten werden, um so einfacher Einfluss auf die Parameter der Pumpe nehmen zu können.

Dabei wird der Stator zu dem Geradenabschnitt so ausgerichtet, dass vorzugsweise entlang des gesamten Geradenabschnittes eine Klemmstelle zwischen Stator und jeweiligem Förderelement entsteht. So kann über die gesamte Länge des Geradenabschnittes eine Förderleistung aufrechterhalten werden. Außerdem kann der Abstand zwischen Stator und Förderelementen einfacher eingestellt werden.

Gemäß einer Ausführungsform ist vorgesehen, dass die Drehebene des Rotors im Wesentlichen parallel zu der Ebene des Stators liegt.

Bei dieser Ausführungsform ist die Quetschrichtung der flexiblen Schlauchleitung im Wesentlichen in axialer Richtung der Drehachse des Rotors ausgerichtet. Die Förderelemente können dabei zylindrische Rollen bzw. Walzen, konische Rollen bzw. Walzen oder bspw. Gleitschuhe sein.

Der Stator kann hierbei eine bspw. kreisförmige Fläche sein, über der der Rotor drehbar gegenüber dem Stator angeordnet ist. Rotor und Stator liegen somit in einer parallelen Ebene. An dem Rotor sind dann die Förderelemente angeordnet, sodass zwischen Förderelement und Stator eine Klemmstelle gebildet werden kann.

Dadurch kann der Stator als stabile und beheizte ebene Fläche ausgelegt werden, was eine einfache und variable Einstellung des Spaltes ermöglicht. Da bei dieser Variante durch die Drehbewegung der Rollen Abrieb entstehen könnte, ist der Einsatz von konischen Rollen vorteilhaft. Außerdem ermöglicht diese Variante ein schnelles Einlegen und Entfernen der Schlauchleitung, wodurch Stillstandzeiten minimiert werden können.

Gemäß einer Ausführungsform ist vorgesehen, dass der Abstand zwischen Stator und den Förderelementen einstellbar ist.

Durch die Einstellung des Abstandes zwischen Stator und den Förderelementen lässt sich die Förderleistung, insbesondere hinsichtlich des Druckes und/oder des Volumens einstellen, sodass flexibel auf die Randbedingungen des Injektionsprozesses Rücksicht genommen werden kann. Dies kann bspw. dadurch geschehen, dass der Stator relativ zum Rotor verstellbar ist. Denkbar ist aber auch, dass die Förderelemente exzentrisch gelagert sind, sodass diese schnell verstellt werden können.

Der Abstand kann mechanisch fest eingestellt sein oder aber flexibel regel- oder steuerbar sein (bspw. mittels einer Prozesssteuerung). Denkbar sind hier bspw. pneumatisch oder hydraulisch betätigte oder über Druckfedern oder sonstige Aktorik betätigte Spaltbegrenzer.

In einer weiteren Ausführungsform kann vorgesehen sein, dass der Abstand durch Entfernen des Stators und/oder einer oder mehrerer Förderelemente verändert wird, um so bspw. die Schlauchleitung schnell einlegen und entfernen zu können. So kann hierfür bspw. ein Schnellverschluss zum werkzeuglosen Entfernen eines der Komponenten der Peristaltikpumpe vorgesehen sein.

Gemäß einer Ausführungsform ist vorgesehen, dass die Förderelemente drehbar gelagert sind, wobei die drehbar gelagerten Förderelemente über eine Antriebsvorrichtung mit der Drehung des Rotors synchronisiert sind und/oder wobei die drehbar gelagerten Förderelemente mit einem Abschnitt ihrer Mantelfläche an einer Kontaktfläche des Stators entlanggeführt sind, deren Reibwert höher ist als der Reibwert der flexiblen Schlauchleitung.

Bei der Verwendung einer Schlauchpumpe führt die Elastizität des Schlauches in Kombination mit den festen Förderelementen zu einer relativen Bewegung und hohen Reibungen, die ein Walken des Schlauches zur Folge hat. Der Schlauch wird dadurch zusätzlich in Bewegungsrichtung der Förderelemente gezogen und somit auf unerwünschter Weise verformt. Für einen effizienten Betrieb ist es vorteilhaft, diese mechanische Verformung und Bewegung möglichst zu reduzieren, um einerseits ein leichtgängiges Vorwärtsbewegen der Förderelemente zu gewährleisten und andererseits durch eine gleitende Bewegung zwischen Schlauch und Förderelementen das Walken zu minimieren. Insbesondere bei hohen Lasten und Drücken ist eine Verringerung der Reibung wünschenswert.

Durch den Absatz von Schmiermittel, die zwischen den Förderelementen und der Schlauchleitung vorgesehen sind, kann die Reibung verringert werden. Auch die Verwendung von haftmindernden Oberflächen auf den Förderelementen ist denkbar, während die feststehende, gegenüberliegende Seite des Rotors, auf der sich die Schlauchleitung abstützt, aus einem Material mit erhöhter Reibung besteht, um die Stabilität des Schlauches in Position zu gewährleisten. Auch die Verwendung einer Umhüllung zur Reduzierung der Reibung ist denkbar.

Alternativ wird endlich hierzu kann vorgesehen sein, dass die Förderelemente, die beispielsweise als drehbar Rollen ausgebildet sind, mit der Drehung des Rotors so synchronisiert sind, dass sie sich genauso schnell drehen, wie sich die Förderrollen gegenüber dem Stator bewegen. Hierbei entstehende theoretisch keine Kräfte mehr auf dem Schlauch, die ihn ziehen oder vorwärtsdrücken.

Solche Antriebsvorrichtung kann beispielsweise eine Verbindung mit dem Antrieb bzw. der Antriebswelle des Rotors sein. Denkbar ist aber auch, dass die Antriebsvorrichtung passiv arbeitet und dabei beispielsweise Zahnräder an den Förderrollen vorgesehen sind, die mit einer Zahnstange an dem Stator und/oder Rotor eingreifen und dabei die Antriebskräfte der Rollen sicher über das Zahnprofil abtragen. Die Drehung des Rotors führt dann zu einem Eingreifen der Zahnräder an den Förderrollen in die Zahnstange am Stator, wodurch Walkbewegungen verringert werden.

Alternativ oder zusätzlich kann auch vorgesehen sein, dass der Stator zumindest abschnittsweise eine Mantelfläche hat, dessen Reibwert höher ist als der Reibwert der flexiblen Schlauchleitung, sodass diese Fläche die Hauptkräfte für den Antrieb der Förderrollen aufnehmen.

Gemäß einer Ausführungsform ist vorgesehen, dass die flexible Schlauchleitung ein Silikonschlauch ist und/oder dass die flexible Schlauchleitung im Bereich der mindestens einen Peristaltikpumpe mit einem flexiblen Gewebe, insbesondere einem Glasfasergewebe, umhüllt ist.

Gemäß einer Ausführungsform ist vorgesehen, dass die flexible Schlauchleitung eingerichtet ist, Drücke von bis zu 15 bar und/oder Temperaturen von bis zu 150°C standzuhalten. Bei den entsprechenden Prozessbedingungen sollte die flexible Schlauchleitung elastisch bleiben und nach dem Zusammenquetschen wieder von alleine expandieren.

Durch die Umhüllung der flexiblen Schlauchleitung mit einem Glasfasergewebe kann der Reibwert deutlich reduziert werden, wodurch negative Aspekte der Peristaltikpumpe reduziert werden können.

Gemäß einer Ausführungsform ist vorgesehen, dass eine Heizvorrichtung vorgesehen ist, die zum zumindest abschnittsweisen Temperieren der flexiblen Schlauchleitung eingerichtet ist.

Hierbei wird die flexible Schlauchleitung vorzugsweise nicht nur innerhalb der Peristaltikpumpe temperiert, sondern es werden auch andere Abschnitte der Schlauchleitung oder die gesamte Schlauchleitung vom Matrixreservoir bis zum Formwerkzeug temperiert. Dies kann bspw. mittels einer Schlauchheizung realisiert werden.

Gemäß einer Ausführungsform ist vorgesehen, dass an mindestens einer flexiblen Schlauchleitung außen ein Drucksensor angeordnet ist, der durch Erfassen eines Druckparametes an einer äußeren Mantelfläche der flexiblen Schlauchleitung zum Bestimmen eines Matrixmaterialdruckes im Inneren der Schlauchleitung ausgebildet ist.

Aufgrund der Verwendung einer flexiblen Schlauchleitung kann der Innendruck, der an der Innenwandung der flexiblen Schlauchleitung anliegt, durch das Erfassen eines Druckparameters an der äußeren Mantelfläche der flexiblen Schlauchleitung bestimmt werden, da der Druck an der Innenwandung aufgrund der Flexibilität der Schutzkleidung mit einem Druck an der äußeren Mantelfläche der flexiblen Schlauchleitung korreliert.

Hierdurch wird es möglich, auf Drucksensoren innerhalb des Systems derart zu verzichten, dass diese mit dem Matrixmaterial in Kontakt kommen, was entweder zum Verlust des Sensors nach dem Injektionsprozess führt oder mit einer aufwendigen Reinigung einhergeht.

Gemäß einer Ausführungsform ist vorgesehen, dass in einer flexiblen Schlauchleitung am Ausgang des Formwerkzeuges mindestens eine Schlauchklemme vorgesehen ist, die zum Abklemmen der Schlauchleitung eingerichtet ist.

Mit der Schlauchklemme kann der Materialfluss gesteuert werden. Durch das Abklemmen des Schlauches mithilfe der statischen Schlauchpresse kann der Injektionsraum zusätzlich verkleinert werden. Dies führt bei einer vollständig gefüllten Kavität am Ende des Prozesses zu einem weiteren Anstieg des Innendrucks, was sich wiederum positiv auf die Qualität der gefertigten Bauteile auswirkt.

Gemäß einer Ausführungsform ist vorgesehen, dass in der Schlauchleitung mindestens ein Schlauchklemme vorgesehen ist, die zum Abklemmen der Schlauchleitung eingerichtet ist, wobei die Schlauchklemme mit einer Steuereinheit verbunden ist und die Steuereinheit derart eingerichtet ist, dass während des Förderns des Matrixmaterials durch die mindestens eine Peristaltikpumpe die Schlauchleitung zyklisch abgeklemmt und wieder geöffnet wird, um einen pulsartigen Anstieg des Matrixmaterialdruckes und/oder Matrixmaterialvolumens zu bewirken. Auch hier kann die Verwendung einer flexiblen Schlauchleitung dazu genutzt werden, in einer technisch einfachen Ausführung eine Ventilfunktion mittels eines Klemmenventils bzw. einer Schlauchklemme vorzusehen, sodass hierüber der Durchfluss gesteuert und in Zusammenhang mit einem entsprechenden Drucksensor auch geregelt werden kann.

Dabei kann zyklisch und pulsartig mithilfe der Schlauchklemme der Durchfluss unterbrochen und anschließend wieder geöffnet werden, um so einen impulsartigen und zyklischen Anstieg des Materialdrucks und/oder des Materialvolumens zu bewirken.

Der Einsatz einer Schlauchpresse eröffnet neue Möglichkeiten zur Prozesssteuerung. Die Charakteristik des pulsartigen Druckanstiegs und des Fördervolumens kann direkt über den Durchmesser des Schlauchs gesteuert werden. Abhängig von den Anforderungen des zu fertigenden Bauteils lässt sich dieser Effekt durch die gezielte Wahl des Schlauchs, insbesondere durch die Anpassung des Innendurchmessers, verstärken oder verringern. Somit kann der Effekt positiv genutzt werden, um die Qualität der Bauteile zu erhöhen.

Wie zuvor erläutert, kann der charakteristische pulsartige Druckanstieg, der bei einer Peristaltikpumpe auftritt, gezielt genutzt werden. Dieser Effekt lässt sich im Verfahren weiter verstärken, indem die Schlauchklemme zyklisch öffnet und schließt. Im geschlossenen Zustand baut sich vor dem Ventil ein Druck auf, während sich der Druck dahinter verringert. Beim Öffnen des Ventils wird das Matrixmaterial dann durch den aufgebauten Druck mit erhöhter Kraft durch die Leitungen gepresst.

Dadurch kann der natürliche Puls-Effekt der Schlauchpumpe verstärkt und noch gezielter eingesetzt werden. Die Betätigung der Schlauchklemme als Ventil kann dabei sowohl pneumatisch als auch mechanisch erfolgen.

Gemäß einer Ausführungsform ist vorgesehen, dass zwischen der Peristaltikpumpe und dem Einlass an dem Formwerkzeug eine Steigleitung in der flexiblen Schlauchleitung abgezweigt ist, wobei ein Sensor in der Steigleitung zum Erfassen eines Füllstandes in der Steigleitung vorgesehen ist.

Hierdurch kann eine weitere Optimierung des RTM-Verfahrens in Verbindung mit der Schlauchpumpe erzielt werden. Um die vollständige Evakuierung des Schlauches und der Werkzeugkavität sicherzustellen (Vakuumaufbau), muss der Schlauch bereits mit Matrixmaterial gefüllt und somit hermetisch abgedichtet sein. Hierzu kann das Matrixmaterial bis zu einer vordefinierten Stelle vorgefördert werden. An einer bestimmten Position befindet sich nun ein Steigrohr, das entsprechend der Schwerkraft vertikal ausgerichtet ist. Ein externer Sensor, der außerhalb des Schlauches installiert ist, erfasst den Füllstand des Matrixmaterials im Steigrohr.

Sobald der Füllstand erreicht ist, blockiert die Sensorik entweder die Pumpe oder aktiviert eine separate Abklemmvorrichtung. Diese Maßnahme verhindert, dass Matrixmaterial im Schlauch weiterfließt und unbeabsichtigt in das Bauteil oder in die Pumpe gelangt, während das Vakuum noch aufrechterhalten wird. Diese Präzisionssteuerung erlaubt eine kontrollierte Injektion und ist vorteilhaft, um im RTM-Prozess eine gleichmäßige und zuverlässige Harzverteilung zu erreichen, die den hohen Anforderungen in der Faserverbundherstellung insbesondere in der Luftfahrt entspricht.

Des Weiteren könnte ein doppelt genutztes Heizprofil für den Vor- und Rücklauf eine effiziente Möglichkeit bieten, die Heizenergie im RTM-Verfahren zu reduzieren. Um die Viskosität des Matrixmaterials zu senken und so eine bessere Fließfähigkeit zu gewährleisten, ist eine beheizte Strecke entlang des Schlauches vorgesehen. Das Heizprofil, in das der Schlauch eingelegt wird, kann so konzipiert werden, dass sowohl die Schläuche des Vorlaufs als auch des Rücklaufs darin Platz finden. Diese duale Nutzung des Heizprofils optimiert die Wärmeverteilung und minimiert den Energieaufwand, was insbesondere bei kontinuierlichen Fertigungsprozessen von Vorteil ist. Die Einsparung an Heizenergie trägt nicht nur zur Effizienz des Verfahrens bei, sondern unterstützt auch eine ressourcenschonende Produktion.

Die Aufgabe wird im Übrigen auch mit dem Verfahren zur Herstellung eines Faserverbundbauteils aus einem Faserverbundwerkstoff aufweisend ein Fasermaterial und ein das Fasermaterial einbettendes Matrixmaterial mittels eines Injektionsverfahrens erfindungsgemäß gelöst, wobei das Verfahren die folgenden Schritte umfasst:
- Bereitstellen eines Formwerkzeuges mit einer formgebenden Werkzeugoberfläche,
- Einbringen des trockenen Fasermaterials in das Formwerkzeug, und
- Injizieren des Matrixmaterials in das in das Formwerkzeug eingebrachte trockene Fasermaterial in einem Injektionsverfahren, wobei
- eine Injektionsvorrichtung wie vorstehend beschrieben bereitgestellt wird, wobei das Matrixmaterial mittels der bereitgestellten Injektionsvorrichtung injiziert wird.

Gemäß einer Ausführungsform ist vorgesehen, dass vor dem Injektionsverfahren zunächst eine flexible Schlauchleitung in die mindestens eine Peristaltikpumpe eingesetzt wird und dass nach dem Injektionsverfahren die flexible Schlauchleitung entsorgt wird.

Die Verwendung der Schlauchpumpe ermöglicht einen erweiterten und verbesserten RTM-Prozess, der im einfachsten Fall umfasst:
1. Vorbereitung: Vor der Injektion wird der elastische Schlauch in die Pumpe eingelegt und dient gleichzeitig als direkte Zuleitung im RTM-Prozess. Der variable Schlauchspalt der Pumpe ermöglicht ein einfaches Einlegen und Herausnehmen des Schlauches.
2. Harzentgasung und Zufuhr: Das Matrixmaterial wird vor der Injektion entgast und aus einem beheizten Reservoir unter atmosphärischem Druck angesaugt. Das Matrixreservoir ist beheizt, steht aber nicht unter Druck, was das Handling vereinfacht.
3. Harzinjektion: Die Schlauchpumpe führt das Matrixmaterial über die elastische Verformung des Schlauches weiter zum Injektionswerkzeug. Der Innendruck des Schlauches wird an unterschiedlichen Stellen über Sensoren überwacht, ohne dass diese direkt mit dem Matrixmaterial in Berührung kommen, wodurch eine aufwändige Reinigung der Sensoren entfällt. Der Materialfluss wird präzise durch die Anpassung der Motorgeschwindigkeit und den variabel wählbaren Schlauchdurchmesser gesteuert.
4. Werkzeugevakuierung: Vor der Injektion wird das Werkzeug evakuiert, um Luftblasen zu vermeiden. Ein zweiter Schlauch führt das Matrixmaterial in eine Harzfalle, die unter Vakuum steht, um das Werkzeug ordnungsgemäß vorzubereiten.
5. Prozesskontrolle: Der Druck im Schlauch kann direkt über die Sensoren überwacht werden, was eine genaue Prozesskontrolle ermöglicht. Injektionsdrücke von über 15 bar sind möglich, wobei einige optimierte Schläuche sogar höhere Drücke aushalten könnten.
6. Ende der Injektion: Sobald die Pumpe stoppt, dichtet der Schlauch automatisch ab, um ein weiteres Austreten von Matrixmaterial zu verhindern. Falls eine Öffnung des Schlauches erforderlich ist, kann der Schlauchspalt einfach vergrößert werden.
7. Schlauchentfernung: Nach dem Injektionsprozess wird der verwendete Schlauch entsorgt, wodurch der Reinigungsaufwand eliminiert wird. Dies spart Zeit und reduziert den Aufwand für die Reinigung der Komponenten. Alternativ kann der Schlauch in einem vereinfachten Reinigungsprozess aufbereitet werden und je nach vorheriger Nutzungsdauer wiederverwendet werden (der Verschleiß ist dabei zu beachten).

Ein solcher Prozess hat mehrere Vorteile. Die beheizte Pumpe und Schlauchleitungen halten die Viskosität des Harzes konstant, um eine gleichmäßige Injektion zu gewährleisten. Der elastische Schlauch ermöglicht eine flexible und präzise Förderung des Harzes. Die einfache Handhabung des Schlauches reduziert Stillstandzeiten und erleichtert die Prozessvorbereitung. Die direkte Drucküberwachung und die Möglichkeit zur genauen Steuerung des Harzflusses tragen zur Prozesssicherheit bei. Durch den schwallartigen Fluss aufgrund der Charakteristik der Pumpe wird das Harz während der Injektionsphase oszillierend in die Kavität gefördert, was sich wiederum positiv auf die Tränkung der Fasern auswirkt.

Die Erfindung wird anhand der beigefügten Figuren näher erläutert. Es zeigen:
- Figur 1: schematische Darstellung einer Injektionsvorrichtung;
- Figur 2: schematische Darstellung einer Peristaltikpumpe;
- Figur 3: schematische Darstellung einer Peristaltikpumpe mit Kettenantrieb;
- Figur 4: schematische Darstellung einer Peristaltikpumpe mit ebenem Stator.

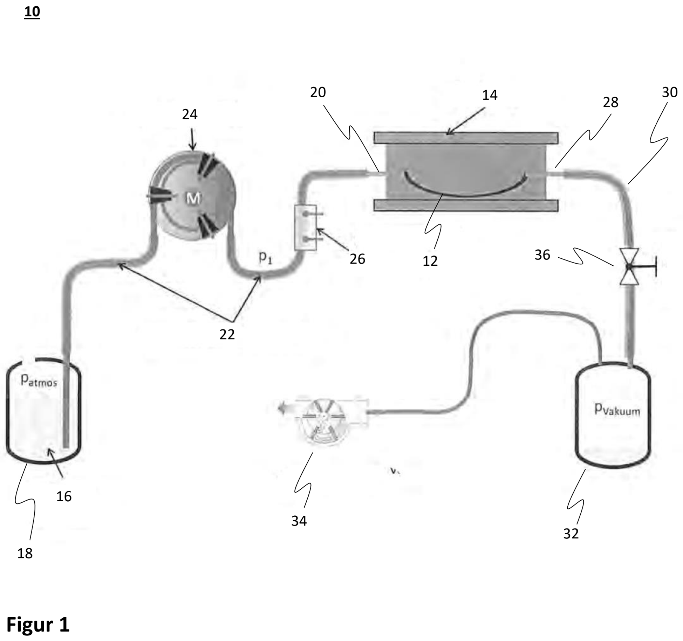

Figur 1 zeigt schematische eine Vorrichtung 10, mit der ein Fasermaterial 12 in einem Formwerkzeug 14 mit einem Matrixmaterial 16 injiziert werden soll. Bei dem Formwerkzeug handelt es sich im Ausführungsbeispiel der Figur 1 um ein geschlossenes Formwerkzeug, dass aus 2 Hälften besteht, wobei im geschlossenen Zustand eine Bauteilkavität gebildet wird, in der sich das zu injizieren der Fasermaterials 12 befindet.

Die Vorrichtung 10 umfasst ein Matrixreservoir 18, in dem sich das Matrixmaterial 16 befindet. An dem Formwerkzeug 14 befindet sich darüber hinaus ein Einlass 20 bzw. auch Anguss genannt, über den das zu injizieren der Matrixmaterial 16 in die Bauteilkavität geleitet und somit in das Fasermaterial 12 transportiert wird.

Von dem Matrixreservoir 18 bis zu dem Einlass 20 an dem Formwerkzeug 14 existiert eine Zuleitung für das Matrixmaterial 16, die als flexible Schlauchleitung 22 ausgebildet ist. Im Ausführungsbeispiel der Figur 1 ist diese flexible Schlauchleitung 22 durchgehend und einstückig ausgebildet, sodass diese als ein Segment bei der Herrichtung der Vorrichtung 10 eingesetzt werden kann.

In der flexiblen Schlauchleitung 22 befindet sich weiterhin eine Fluidpumpe in Form einer Peristaltikpumpe 24, die das Matrixmaterial 16 aus dem Matrixreservoir 18 per Unterdruck angesaugt und in die Bauteilkavität mit dem Fasermaterial 12 hineindrückt.

Zwischen der Peristaltikpumpe 24 und dem Einlass 20 ein Formwerkzeug 14 befindet sich in der flexiblen Schlauchleitung ein Drucksensor 26, der in Bezug auf das Matrixmaterial 16 den Innendruck P1 des Matrixmaterials 16 berührungslos an der äußeren Mantelfläche der flexiblen Schlauchleitung 22 misst.

Im Ausführungsbeispiel der Figur 1 befindet sich am gegenüberliegenden Ende des Einlasses 20 ein Auslass 28 am Formwerkzeug 14, an dem eine zweite flexible Schlauchleitung 30 angeordnet ist,

Diese zweite flexible Schlauchleitung 30 mündet in einer Harzfalle 32, die mithilfe einer Vakuumpumpe 34 evakuiert wird.

In dieser zweiten flexiblen Schlauchleitung 30 ist eine Schlauchklemme 36 vorgesehen, die den flexiblen Schlauch 30 Zusammendrücken kann und damit den Durchfluss unterbrechen kann. Dies ist bevorzugt dann der Fall, wenn sich Matrixmaterial in der Harzfalle 32 sammelt, was ein Indiz dafür ist, dass das Fasermaterial 12 mit dem Matrixmaterial 16 durchspült wird. Wird die flexible Schlauchleitung 30 mithilfe der Schlauch 36 abgeklemmt, so baut sich ein Druck in dem Fasermaterial 12 auf, wodurch sich das Fasermaterial besser verteilt. Wird die Schlauchklemme 36 wieder geöffnet, so sinkt der Druck rapide ab. Wird dieser Vorgang zyklisch wiederholt, so kann eine deutliche Verbesserung der Infiltration erreicht werden.

Denkbar ist auch, dass die zweite flexible Schlauchleitung 30 in das Matrixreservoir 18 oder die erste flexible Schlauchleitung 22 zurückgeführt wird, umso einen Spülkreislauf zu bewirken. Es ist ebenfalls denkbar, dass in der zweiten flexiblen Schlauchleitung 30 ebenfalls eine Peristaltikpumpe vorgesehen ist, um hier unterstützend mitzuwirken.

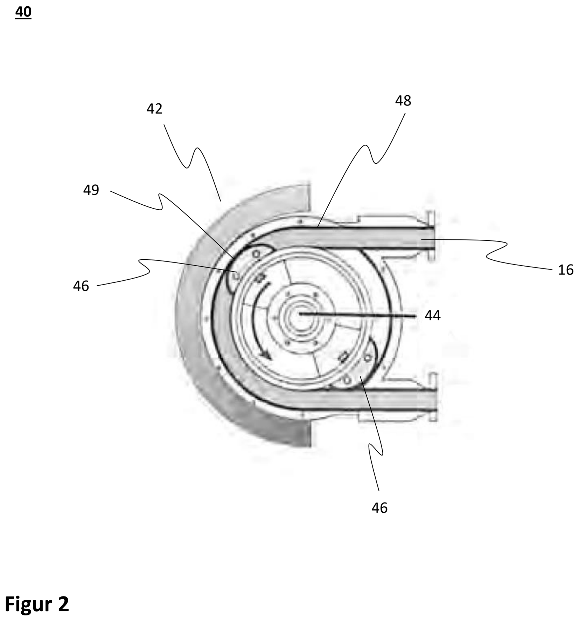

Figur 2 zeigt eine einfache Ausführungsform einer Peristaltikpumpe 40, die einen Stator 42 und einem Rotor 44 hat. Einem Rotor 44 sind Förderelemente 46 in Form von Rollen angeordnet, welche die flexible Schlauchleitung 48 an dem Stator abklemmen. Da sich der Rotor 44 dreht, wird so die Klemmstelle 49 entlang des Stators 42 bewegt, sodass hierdurch das Matrixmaterial 16 befördert werden kann.

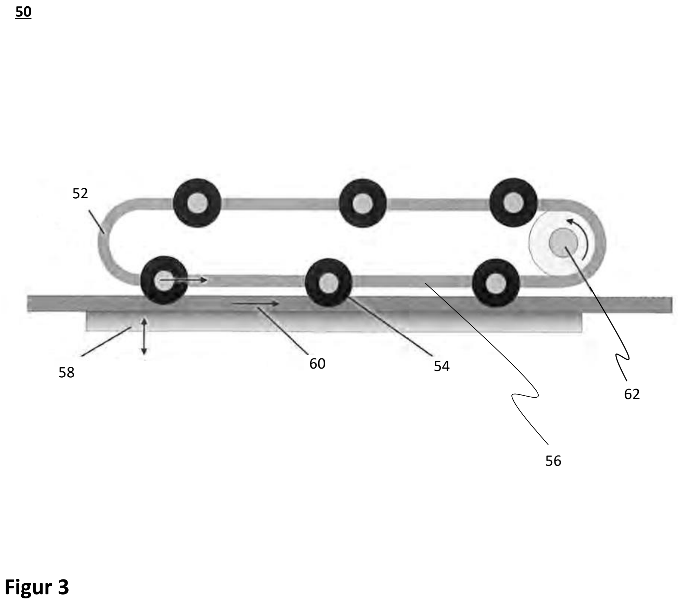

Figur 3 zeigt einer Ausführungsform, bei der die Peristaltikpumpe 50 durch eine Förderkette oder einen Förderriemen 52 gebildet wird, an dem die Förderelemente 54 in Form von Rollen oder Geleitsschuhen angeordnet sind. Die Peristaltikpumpe 50 ist dabei so ausgebildet, dass die Förderkette oder Förderriemen 52 einen Geradenabschnitt 56 hat, der mit dem Stator 58 so korrespondiert, dass die Förderelemente 54 im Bereich des Geradenabschnittes 56 die flexible Schlauchleitung 60 an dem Stator 58 abklemmen. Die Förderkette oder der Förderriemen 52 stehen dabei mit einem Rotor 62 Wirkverbindung, dass die Förderkette oder der Förderriemen 52 drehbar angetrieben wird und die Förderelemente, die darin angeordnet sind, gegenüber dem Stator 58 relativ bewegt werden.

Der Stator 58 kann dabei gegenüber den Förderelementen 54 verstellbar ausgeführt sein, um den Abstand zwischen dem Förderelementen 54 und dem Stator 58 Einstellen bzw. variieren zu können. Hierdurch kann das Maß, mit dem die Schlauchleitung 60 abgeklemmt wird, variiert werden.

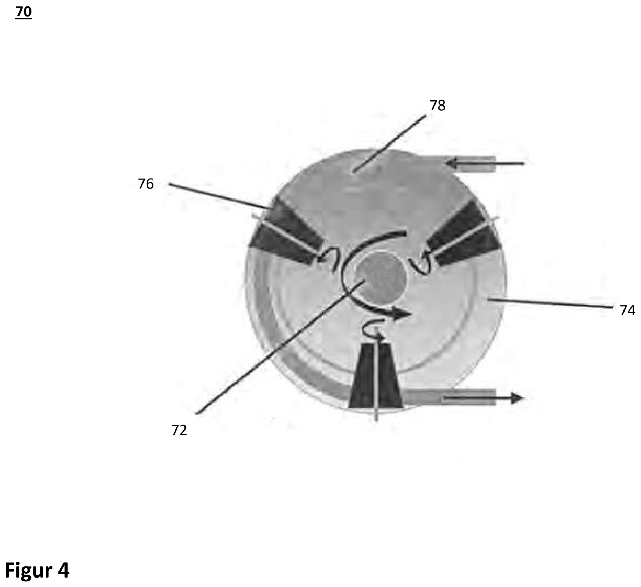

Figur 4 zeigt schließlich eine Ausführungsform einer Peristaltikpumpe 70 in einer Draufsicht, die einen Rotor 72 und einen parallel in der gleichen Ebene dazu liegenden Stator 74 zeigt. Da die Figur 4 eine Aufsicht auf die Peristaltikpumpe 70 darstellt, sind Rotor 72 und Stator 74 überlagernd gezeigt.

An dem Rotor 72 befinden sich nun konisch geformte Förderelemente 76, die drehbar als konische Rollen ausgebildet und bei einer Drehung des Rotors 72 über den Stator 74 gerollt werden. Zwischen dem Stator 74 und den Förderelementen 76 befindet sich die flexible Schlauchleitung 78, sodass diese an den Förderelementen 76 entsprechend gegenüber dem Stator 74 abgeklemmt werden kann.

Auch hier kann der Stator 74 höhenverstellbar ausgeführt sein, um den Abstand zwischen Förderelementen 76 und Stator 74 einstellen zu können. Außerdem hat dieser Ausführungsform den Vorteil, dass der gesamte Stator 74 temperiert werden kann, umso das zu fördernde Matrixmaterial auf der gewünschten Prozesstemperatur zu halten.

### Bezugszeichenliste

- 10: Vorrichtung
- 12: Fasermaterial
- 14: Formwerkzeug
- 16: Matrixmaterial
- 18: Matrixreservoir
- 20: Einlass
- 22: flexible Schlauchleitung (erste)
- 24: Peristaltikpumpe
- 26: Drucksensor
- 28: Auslass
- 30: zweite flexible Schlauchleitung
- 32: Harzfalle
- 34: Vakuumpumpe
- 36: Schlauchklemme
- 40: Peristaltikpumpe
- 42: Stator
- 44: Rotor
- 46: Förderelemente
- 48: flexible Schlauchleitung
- 49: Klemmstelle
- 50: Peristaltikpumpe
- 52: Förderkette/Förderriemen
- 54: Förderelemente
- 58: Stator
- 60: flexible Schlauchleitung
- 62: Rotor
- 70: Peristaltikpumpe
- 72: Rotor
- 74: Stator
- 76: Förderelemente/konische Walzen
- 78: flexible Schlauchleitung

## Patentansprüche

1. Vorrichtung (10) zur Herstellung eines Faserverbundbauteils aus einem Faserverbundwerkstoff aufweisend ein Fasermaterial (12) und ein das Fasermaterial (12) einbettendes Matrixmaterial (16) eingerichtet zur Durchführung eines Injektionsverfahrens, bei dem das in ein Formwerkzeug (14) eingebrachte, trockene Fasermaterial (12) mit dem Matrixmaterial (16) injiziert wird, umfassend:
- ein Matrixreservoir (18), in dem das zu injizierende Matrixmaterial (16) bevorratet ist, und
- ein Leitungssystem, das zumindest eine Zuleitung von dem Matrixreservoir (18) zu einem Einlass (20) an dem Formwerkzeug (14) hat, um das Matrixmaterial (16) von dem Matrixreservoir (18) in das in das Formwerkzeug (14) eingebrachte Fasermaterial (12) zu injizieren,
**dadurch gekennzeichnet, dass**
- die mindestens eine Zuleitung zumindest abschnittsweise eine durchgehende flexible Schlauchleitung (22, 30, 48, 60, 78) hat,
- wobei zwischen Matrixreservoir (18) und Einlass (20) in der flexiblen Schlauchleitung (22, 30, 48, 60, 78) mindestens eine Peristaltikpumpe (24, 40, 50, 70) vorgesehen ist,
- wobei die mindestens eine Peristaltikpumpe (24, 40, 50, 70) eingerichtet ist, durch eine äußere mechanisch-elastische Verformung der flexiblen Schlauchleitung (22, 30, 48, 60, 78) das Matrixmaterial (16) von dem Matrixreservoir (18) in das Fasermaterial (12) zu injizieren.

2. Vorrichtung (10) nach Anspruch 1, **dadurch gekennzeichnet, dass** das Matrixreservoir (18) drucklos ist.

3. Vorrichtung (10) nach Anspruch 1 oder 2, **dadurch gekennzeichnet, dass** am Einlass (20) eine erste flexible Schlauchleitung (22) vorgesehen ist und dass das Leitungssystem ferner mindestens eine an einem Auslass (28) an dem Formwerkzeug (14) angeordnete zweite flexible Schlauchleitung (30) aufweist, wobei in der zweiten flexiblen Schlauchleitung (30) ebenfalls mindestens eine Peristaltikpumpe (24, 40, 50, 70) vorgesehen ist.

4. Vorrichtung (10) nach Anspruch 3, **dadurch gekennzeichnet, dass** die zweite flexible Schlauchleitung (30) in die erste flexible Schlauchleitung (22) und/oder in das Matrixreservoir (18) mündet.

5. Vorrichtung (10) nach einem der vorhergehenden Ansprüche, **dadurch gekennzeichnet, dass** die mindestens eine Peristaltikpumpe (24, 40, 50, 70) einen Rotor (44, 62, 72) mit mehreren Förderelementen (46, 54, 76) und einen Stator (42, 58, 74) hat, auf dem die flexible Schlauchleitung (22, 30, 48, 60, 78) abgestützt ist, während durch Drehung des Rotors (44, 62, 72) die Förderelemente (46, 54, 76) zur Förderung des Matrixmaterials (16) die mindestens eine flexible Schlauchleitung (22, 30, 48, 60, 78) gegen den Stator (42, 58, 74) abklemmen und so mechanisch-elastisch verformen.

6. Vorrichtung (10) nach Anspruch 5, **dadurch gekennzeichnet, dass** eine Heizvorrichtung vorgesehen ist, die zum Temperieren zumindest eines Teils der Peristaltikpumpe (24, 40, 50, 70) eingerichtet ist.

7. Vorrichtung (10) nach Anspruch 5 oder 6, **dadurch gekennzeichnet, dass** die Förderelemente (46, 54, 76) an einer Förderkette (52) oder Förderriemen (52) angeordnet sind, die einen mit dem Stator (42, 58, 74) korrespondierenden Geradenabschnitt hat und die mit dem Rotor (44, 62, 72) zum drehbaren Antreiben in Wirkverbindung steht.

8. Vorrichtung (10) nach Anspruch 5 oder 6, **dadurch gekennzeichnet, dass** die Drehebene des Rotors (44, 62, 72) im Wesentlichen parallel zu der Ebene des Stators (42, 58, 74) liegt.

9. Vorrichtung (10) nach einem der Ansprüche 5 bis 8, **dadurch gekennzeichnet, dass** der Abstand zwischen Stator (42, 58, 74) und den Förderelementen (46, 54, 76) einstellbar ist.

10. Vorrichtung (10) nach einem der Ansprüche 5 bis 9, **dadurch gekennzeichnet, dass** die Förderelemente (46, 54, 76) drehbar gelagert sind, wobei die drehbar gelagerten Förderelemente (46, 54, 76) über eine Antriebsvorrichtung mit der Drehung des Rotors (44, 62, 72) synchronisiert sind und/oder wobei die drehbar gelagerten Förderelemente (46, 54, 76) mit einem Abschnitt ihrer Mantelfläche an einer Kontaktfläche des Stators (42, 58, 74) entlanggeführt sind, deren Reibwert höher ist als der Reibwert der flexiblen Schlauchleitung (22, 30, 48, 60, 78).

11. Vorrichtung (10) nach einem der vorhergehenden Ansprüche, **dadurch gekennzeichnet, dass** eine Heizvorrichtung vorgesehen ist, die zum zumindest abschnittsweisen Temperieren der flexiblen Schlauchleitung (22, 30, 48, 60, 78) eingerichtet ist.

12. Vorrichtung (10) nach einem der vorhergehenden Ansprüche, **dadurch gekennzeichnet, dass** an mindestens einer flexiblen Schlauchleitung (22, 30, 48, 60, 78) außen ein Drucksensor (26) angeordnet ist, der durch Erfassen eines Druckparametes an einer äußeren Mantelfläche der flexiblen Schlauchleitung (22, 30, 48, 60, 78) zum Bestimmen eines Matrixmaterialdruckes im Inneren der Schlauchleitung (22, 30, 48, 60, 78) ausgebildet ist.

13. Vorrichtung (10) nach einem der vorhergehenden Ansprüche, **dadurch gekennzeichnet, dass** in der Schlauchleitung (22, 30, 48, 60, 78) mindestens ein Schlauchklemme (36) vorgesehen ist, die zum Abklemmen der Schlauchleitung (22, 30, 48, 60, 78) eingerichtet ist, wobei die Schlauchklemme (36) mit einer Steuereinheit verbunden ist und die Steuereinheit derart eingerichtet ist, dass während des Förderns des Matrixmaterials (16) durch die mindestens eine Peristaltikpumpe (24, 40, 50, 70) die Schlauchleitung (22, 30, 48, 60, 78) zyklisch abgeklemmt und wieder geöffnet wird, um einen pulsartigen Anstieg des Matrixmaterialdruckes und/oder Matrixmaterialvolumens zu bewirken.

14. Vorrichtung (10) nach einem der vorhergehenden Ansprüche, **dadurch gekennzeichnet, dass** zwischen der Peristaltikpumpe (24, 40, 50, 70) und dem Einlass (20) an dem Formwerkzeug (14) eine Steigleitung in der flexiblen Schlauchleitung (22, 30, 48, 60, 78) abgezweigt ist, wobei ein Sensor in der Steigleitung zum Erfassen eines Füllstandes in der Steigleitung vorgesehen ist.

15. Vorrichtung (10) nach einem der vorhergehenden Ansprüche, **dadurch gekennzeichnet, dass** die flexible Schlauchleitung (22, 30, 48, 60, 78) ein Silikonschlauch ist und/oder dass die flexible Schlauchleitung (22, 30, 48, 60, 78) im Bereich der mindestens einen Peristaltikpumpe (24, 40, 50, 70) mit einem flexiblen Gewebe, insbesondere einem Glasfasergewebe, umhüllt ist.

16. Verfahren zur Herstellung eines Faserverbundbauteils aus einem Faserverbundwerkstoff aufweisend ein Fasermaterial (12) und ein das Fasermaterial (12) einbettendes Matrixmaterial (16) mittels eines Injektionsverfahrens, wobei das Verfahren die folgenden Schritte umfasst:
- Bereitstellen eines Formwerkzeuges (14) mit einer formgebenden Werkzeugoberfläche,
- Einbringen des trockenen Fasermaterials (12) in das Formwerkzeug (14), und
- Injizieren des Matrixmaterials (16) in das in das Formwerkzeug (14) eingebrachte trockene Fasermaterial (12) in einem Injektionsverfahren,
**dadurch gekennzeichnet, dass**
- eine Injektionsvorrichtung nach einem der vorhergehenden Ansprüche bereitgestellt wird, wobei das Matrixmaterial (16) mittels der bereitgestellten Injektionsvorrichtung injiziert wird.

17. Verfahren nach Anspruch 16, **dadurch gekennzeichnet, dass** vor dem Injektionsverfahren zunächst eine flexible Schlauchleitung (22, 30, 48, 60, 78) in die mindestens eine Peristaltikpumpe (24, 40, 50, 70) eingesetzt wird und dass nach dem Injektionsverfahren die flexible Schlauchleitung (22, 30, 48, 60, 78) entsorgt wird.
